# EUROPÄISCHE PATENTSCHRIFT

(11) **EP 3 435 054 B1**
(45) Veröffentlichungstag und Bekanntmachung des Hinweises auf die Patenterteilung: **29.04.2020**
(21) Anmeldenummer: 18188903.1
(22) Anmeldetag: 12.03.2015
(51) Int. Cl.: G01M 3/32

(54) **EVAKUIERBARE FLEXIBLE LECKAGEPRÜFKAMMER**
EVACUABLE FLEXIBLE LEAK DETECTION CHAMBER
CHAMBRE FLEXIBLE ET ÉVACUABLE POUR LE TEST DE FUITE

(30) Priorität: 18.03.2014 DE 102014205027
(43) Veröffentlichungstag der Anmeldung: 30.01.2019
(62) Teilanmeldung aus: 15712821.6
(73) Patentinhaber: Inficon GmbH, 50968 Köln (DE)
(72) Erfinder: VAN TRIEST, Hendrik, 50827 Köln (DE); DECKER, Silvio, 50999 Köln (DE)
(74) Vertreter: dompatent von Kreisler Selting Werner - Partnerschaft von Patent- und Rechtsanwälten mbB

(56) Entgegenhaltungen:
- EP-A1- 0 741 288
- DE-A1- 19 642 099
- GB-A- 840 294
- US-B1- 6 513 366

## Beschreibung

Die Erfindung betrifft eine evakuierbare flexible Prüfkammer zur Leckprüfung eines Prüflings.

Derartige Prüfkammern sind zum Beispiel Folienkammern, die Wände aus flexiblen Folien aufweisen. Eine solche Prüfkammer ist in EP 0 741 288 A1 beschrieben. Bei dem Prüfling kann es sich beispielsweise um eine Lebensmittelverpackung handeln, die auf Dichtigkeit zu prüfen ist. Der Prüfling wird in die geöffnete Prüfkammer gelegt. Anschließend wird die Prüfkammer geschlossen und evakuiert, wobei sich die flexiblen Wände (Folienwände) an den Prüfling anschmiegen. Unter dem Begriff "Vakuum" wird vorliegend kein absolutes Vakuum verstanden, sondern allgemein ein geringerer Druck als in der die Prüfkammer umgebenden Atmosphäre. Die flexiblen Prüfkammerwände schmiegen sich an den Prüfling an, sobald der Druck innerhalb der Prüfkammer geringer ist als in der die Prüfkammer umgebenden Atmosphäre. Demnach wird unter dem Begriff "evakuieren" auch das Herstellen eines Unterdrucks in der Prüfkammer verstanden und nicht notwendigerweise das Herstellen eines absoluten Vakuums.

Beim Schließen flexibler Prüfkammern besteht eine Schwierigkeit darin, dass aufgrund der Elastizität oder Flexibilität des flexiblen Wandmaterials eine Gasmenge in der Prüfkammer eingeschlossen wird. Je schneller die Kammer geschlossen wird, desto größer ist das eingeschlossene Gasvolumen, weil sich das flexible Wandmaterial aufgrund des Luftwiderstandes wölbt und beim Schließen ein zusätzliches Gasvolumen einfängt. Die Dauer der Evakuierung der Prüfkammer wird dadurch erhöht. Der Geschwindigkeitsgewinn bei einem schnellen Schließen der Kammer führt zu einem entsprechenden Geschwindigkeitsverlust bei deren Evakuierung, weil das eingefangene Gasvolumen ebenfalls evakuiert werden muss.

EP 0 741 288 A1, auf die sich der Oberbegriff von Anspruch 1 bezieht, beschreibt eine evakuierbare Leckageprüfkammer mit flexiblen Wänden, die mit einem Gas befüllt sind.

GB 840294 A beschreibt eine Leckageprüfkammer mit mehrlagigen Wänden.

DE 196 42 099 A1 beschreibt eine Folienprüfkammer zur Dichtheitsprüfung von Verpackungen.

Der Erfindung liegt die Aufgabe zugrunde, eine verbesserte Prüfkammer zu schaffen und ein verbessertes Verfahren zur Leckprüfung bereitzustellen.

Das erfindungsgemäße Verfahren ist definiert durch die Merkmale von Anspruch 1.

Die das Prüfkammervolumen im geschlossenen Zustand umgebende Wand der erfindungsgemäßen Prüfkammer ist zumindest in einem Bereich aus zwei Lagen Wandmaterial gebildet. Die beiden Lagen bilden dabei einen doppellagigen Wandbereich, das heißt eine Doppelwand. Zumindest die dem Prüfkammervolumen und dem darin enthaltenen Prüfling zugewandte Lage ist aus einem flexiblen Material, zum Beispiel aus einem Folienmaterial, gebildet. In dem von den beiden Lagen umschlossenen Zwischenvolumen ist erfindungsgemäß gegenüber der die Prüfkammer umgebenden Atmosphäre ein Überdruck herstellbar oder bereits vorhanden. Der Überdruck liegt vorzugsweise im Bereich von circa 100 mbar gegenüber der umgebenden Atmosphäre. Der Überdruck kann also in einem Bereich von etwa 80 bis 120 mbar gegenüber der umgebenden Atmosphäre liegen. In dem Zwischenvolumen zwischen den beiden Wandlagen können ein Gas, eine Flüssigkeit, ein Schaum oder ein Gel vorhanden sein. Durch den Überdruck ist die dem Prüfkammervolumen zugewandte Lage aus flexiblem Material im geöffneten Zustand der Kammer konvex in Richtung auf den Prüfling gewölbt.

Beim Schließen der Prüfkammer wirkt der Überdruck zwischen den beiden Lagen dem Luftwiderstand entgegen und die flexible Lage fängt kein zusätzliches Gasvolumen ein. Bei einer konvexen Wölbung in Richtung auf den Prüfling wird die flexible Lage gegen den Prüfling gedrückt und von diesem verformt. Das nach dem Schließen der Prüfkammer zu evakuierende Prüfkammervolumen ist dadurch reduziert.

Von besonderer Bedeutung ist, dass zumindest die dem Prüfling und dem Prüfkammervolumen zugewandte Lage aus flexiblem Material besteht. Die zweite, von dem Prüfkammervolumen abgewandte Lage kann entweder starr sein oder ebenfalls aus flexiblem Material bestehen. Die Wand der Prüfkammer kann vollständig oder nur zu einem Teil aus flexiblem Material, zum Beispiel Folienmaterial, bestehen. Es ist denkbar, dass die Wand der Prüfkammer einstückig durchgehend ausgebildet ist und um den Prüfling herumgelegt wird. Alternativ kann die Wand auch aus zwei aufeinander passenden Teilwänden bestehen. Die Randbereiche der Wand können von einem starren Rahmen gehalten werden. Die aufeinander zu klappenden Wandbereiche können durch ein Scharnier geführt werden oder miteinander verbunden sein.

Nach Einlegen des Prüflings in die Prüfkammer und vor dem Schließen der Prüfkammer sollte in dem Zwischenvolumen zwischen den beiden Lagen ein Überdruck im Bereich von ungefähr 100 mbar herrschen oder hergestellt werden. Hierzu kann das Zwischenvolumen mit einer Pumpe verbunden sein, die den Überdruck herstellt. Des Weiteren ist ein Überdruckventil zur Vermeidung von Drücken von mehr als zum Beispiel circa 120 mbar zwischen den beiden Lagen denkbar.

Zwischen dem Prüfling und der Prüfkammerwand sollte ein gasleitendes Material, zum Beispiel eine gasleitende Matte aus einem Vlies, eingebracht werden, welches einen Gasfluss zwischen Prüfling und Wand ermöglicht. Dabei kann sich das gasleitende Material entlang der gesamten Innenseite der Prüfkammerwand erstrecken.

Ein starrer Rahmen kann die flexible Wand eingespannt halten. Dabei ist es vorteilhaft, wenn zwei flexible Kammerwände, die jeweils in einen zum Beispiel kreisrunden Ring-Rahmen eingespannt sind, aufeinander geklappt werden. Zwischen den beiden Rahmen sollte eine Gasdichtung vorhanden sein. Ein Spannelement kann die Rahmen gegeneinander pressen. In zumindest einem Bereich kann ein Scharnier zwischen den beiden Rahmen vorgesehen sein.

Das Zwischenvolumen zwischen den beiden Lagen kann vorteilhafterweise mit einem Drucksensor zur Messung des Drucks zwischen den beiden Lagen versehen sein. Anhand des gemessenen Drucks kann überwacht werden, ob sich der Druck des Zwischenvolumens in dem gewünschten Bereich von etwa 100 mbar befindet.

Zudem kann durch Überwachen des Drucks zwischen den beiden Lagen die Dichtheit der beiden Lagen überwacht werden. Falls eine der beiden Lagen defekt ist wird der Druck zwischen den beiden Lagen fallen.

Zudem kann durch eine Überwachung des Drucks zwischen den beiden Lagen beim Schließen der Prüfkammer eine Überprüfung erfolgen, ob sich ein Prüfling in der Prüfkammer befindet. Wenn die Kammer mit der doppellagigen Wand geschlossen wird, ändert sich der Druck zwischen den beiden Lagen, weil die konvexe Wölbung gegen den Prüfling oder die gegenüberliegende Wand gepresst wird. Wenn sich ein Prüfling in der Prüfkammer befindet, ist diese Druckänderung größer als ohne Prüfling. Dadurch können mögliche Fehlbeladungen frühzeitig erkannt werden.

Im Folgenden wird anhand der Figuren ein Ausführungsbeispiel der Erfindung näher erläutert. Es zeigen:
- Figur 1: eine schematische Schnittdarstellung des Ausführungsbeispiels in geöffnetem Zustand während des Schließens der Kammer,
- Figur 2: die Schnittdarstellung nach Figur 1 im geschlossenen Zustand der Kammer und

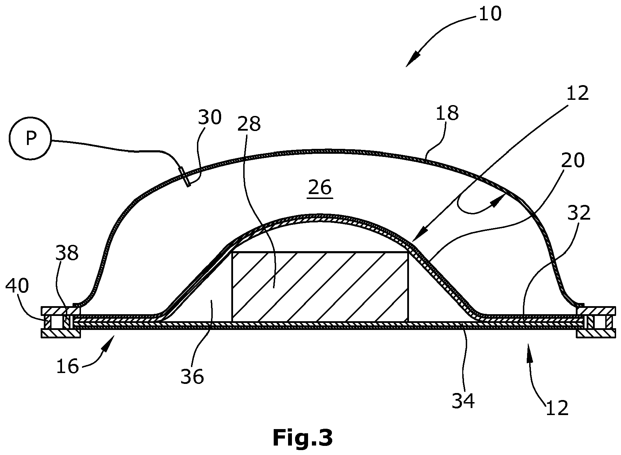

- Figur 3: einen Schnitt durch das Ausführungsbeispiel im geschlossenen Zustand der Kammer vor deren Evakuierung.

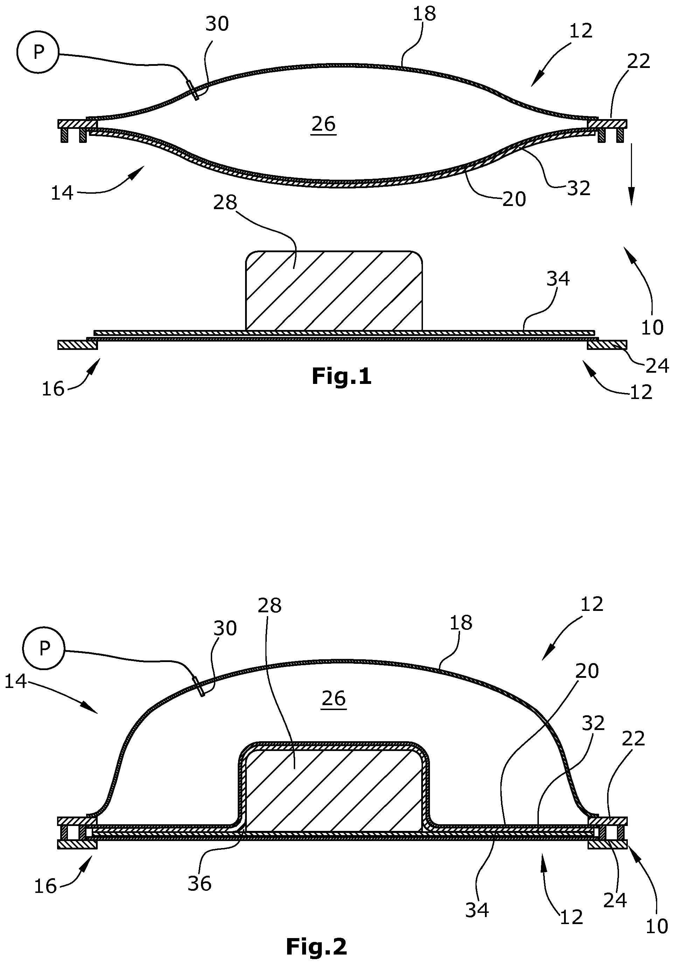

Die Prüfkammer 10 weist eine Wand 12 auf, die aus zwei Teilwänden 14, 16 besteht. Die Teilwand 16 bildet dabei den Boden der Prüfkammer 10 und die Teilwand 14 bildet den Deckel der Prüfkammer 10. Die Teilwand 16 ist starr, zum Beispiel aus Metall. Die Teilwand 14 besteht aus zwei Lagen 18, 20 einer flexiblen Folie. In der Draufsicht sind die Teilwände 14, 16 kreisrund ausgebildet und in ihren jeweiligen Randbereichen von einem starren Rahmen 22, 24 in Form eines Rings gehalten. Andere Formen der Teilwände 14,16 sind ebenfalls denkbar, bei denen die Teilwände 14,16 in der Draufsicht zumindest eine gerade Seite aufweisen. Der obere Ring 22 hält die beiden Folienlagen 18, 20 in deren äußerem Randbereich dichtend zusammen. Dadurch ist zwischen den beiden Lagen 18, 20 ein gasdichtabgeschlossenes Zwischenvolumen 26 gebildet. In dem Zwischenvolumen 26 herrscht ein Druck von ca. 80 - 90 mbar, der dem Luftwiderstand beim Schließen der oberen Teilwand 14 in Richtung des Pfeiles in Figur 1 entgegenwirkt. Aufgrund des Überdrucks sind die beiden Folienlagen 18, 20 konvex nach außen gewölbt. Die untere Folienlage 20 ist im nicht geschlossenen Zustand der Prüfkammer 10 konvex in Richtung des Prüflings 28 gewölbt. Der Ring-Rahmen 22 ist mit einer in den Figuren nicht dargestellten Dichtung versehen, um das Zwischenvolumen 26 gasdicht abzuschließen.

Ein Drucksensor 30 ist in dem Zwischenvolumen 26 zwischen den beiden Lagen 18, 20 angeordnet und mit einem Druckmessgerät P verbunden, um den Druck des Zwischenvolumens 26 zu messen. Durch Überwachen des Drucks in dem Zwischenvolumen 26 kann eine Undichtigkeit der Folienlagen 18, 20 oder des Rahmens 22, das heißt also der oberen Teilwand 14, erkannt werden. Der Druck kann zudem als Hinweis darauf verwendet werden, ob sich ein Prüfling 28 in der Prüfkammer 10 befindet und welches Volumen dieser Prüfling hat. Je größer das Volumen des Prüflings 28 ist, desto größer ist der von dem Druckmessgerät P gemessene Druck des Zwischenvolumens 26 im geschlossenen Zustand der Prüfkammer gemäß Figur 2.

Mit Hilfe des Druckmessgeräts P kann beim Befüllen des Zwischenvolumens 26 der Druck genau auf den gewünschten Wert eingestellt werden. Vorzugsweise ist dabei die obere Teilwand 14 mit einem in den Figuren nicht dargestellten Ventilanschluss zum Anschließen einer Pumpe oder Druckgasquelle versehen, mit der das Zwischenvolumen 26 befüllt werden kann. Alternativ ist auch denkbar, dass das Zwischenvolumen 26 mit einer Flüssigkeit, einem Schaum oder einem Gel gefüllt ist. Ein ebenfalls in den Figuren nicht dargestelltes Überdruckventil der oberen Teilwand 14 kann verhindern, dass ein zu großer Druck zwischen den beiden Lagen 18, 20 hergestellt wird.

Zwischen dem Prüfling 28 und jeder der beiden Teilwände 14, 16 ist jeweils ein gasleitendes Flächengebilde 32,34, wie zum Beispiel ein Flies oder ein Gewebe, eingebracht, das dazu führt, dass in dem in Figur 2 dargestellten geschlossenen Zustand der Prüfkammer 10 Gas aus dem Prüfkammervolumen 36 beim Evakuieren der Prüfkammer 10 entweichen kann. Das Flächengebilde wird im Folgenden auch als Membran bezeichnet.

Die beiden Ring-Rahmen 22, 24 sind durch eine erste, innere Ringdichtung 38 und eine zweite, äußere Ringdichtung 40 gasdicht miteinander verbunden. Im geschlossenen Zustand werden die beiden Ring-Rahmen 22, 24 von einer in den Figuren nicht dargestellten Spannvorrichtung gegeneinander gepresst.

Nachdem der Prüfling 28 auf die auf der unteren Teilwand 16 aufliegende gasleitende Membran 34 gelegt wurde, wird über den Prüfling die zweite gasleitende Membran 32, wie in Figur 1 dargestellt, gelegt. Anschließend wird die obere Teilwand 14 zum Schließen der Prüfkammer 10 in Richtung des Pfeiles nach unten in Richtung auf den Prüfling 28 und auf die untere Teilwand 16 herabgesenkt.

Beim Schließen der Prüfkammer kann der Deckel, das heißt die obere Teilwand 14, schneller als bisher bewegt werden, weil der Überdruck in dem Zwischenvolumen 26 dem Luftwiderstand beim Herabsenken des Deckels entgegenwirkt und ein Verformen der flexiblen Folienlagen verhindert. Durch die konvexe Wölbung der unteren Lage 20 in Richtung auf den Prüfling 28 wird das Prüfkammervolumen zwischen den beiden Teilwänden 14, 16 im geschlossenen Zustand der Prüfkammer 10 bereits vor deren Evakuierung reduziert. Das verbleibende, noch zu evakuierende Restvolumen ist dadurch geringer. Im Ergebnis kann mit der erfindungsgemäßen Prüfkammer ein schnelleres Schließen und Evakuieren und somit eine schnellere Inbetriebnahme der Prüfkammer erfolgen.

## Patentansprüche

1. Verfahren zur Leckprüfung eines in einer Prüfkammer (10) enthaltenen Prüflings, wobei die Prüfkammer eine evakuierbare flexible Prüfkammer (10) zur Leckprüfung eines Prüflings ist, mit einer ein Prüfkammervolumen (36) umgebenden Wand (12), wobei
zumindest ein Bereich der Wand aus zwei Lagen (18, 20) Wandmaterial gebildet ist, von denen zumindest die dem Prüfkammervolumen (36) zugewandte Lage (20) aus einem flexiblen Material gebildet ist,
zwischen den beiden Lagen (18, 20) gegenüber der die Prüfkammer (10) umgebenden Atmosphäre ein Überdruck herstellbar ist, und
vor dem Schließen der Kammer (10) ein Überdruck zwischen den Lagen (18, 20) hergestellt wird,
**dadurch gekennzeichnet,**
**dass** eine Überprüfung, ob sich ein Prüfling in der Prüfkammer (10) befindet, dadurch erfolgt, dass beim Schließen der Prüfkammer (10) der Druck zwischen den beiden Lagen (18, 20) überwacht wird.

2. Verfahren nach Anspruch 1, **dadurch gekennzeichnet, dass** das flexible Material eine Folie ist.

3. Verfahren nach Anspruch 1 oder 2, **dadurch gekennzeichnet, dass** zwischen den beiden Lagen (18, 20) ein Gas, eine Flüssigkeit, ein Schaum oder ein Gel enthalten ist.

4. Verfahren nach einem der Ansprüche 1 - 3, **dadurch gekennzeichnet, dass** die gesamte das Prüfkammervolumen (36) umgebende Wand (12) aus flexiblem Material einstückig oder aus zwei aufeinander passenden Teilwänden (14, 16) gebildet ist.

5. Verfahren nach einem der Ansprüche 1 - 4, **dadurch gekennzeichnet, dass** beide Lagen (18, 20) aus flexiblem Material bestehen.

6. Verfahren nach einem der Ansprüche 1 - 4, **dadurch gekennzeichnet, dass** die von dem Prüfkammervolumen (36) abgewandte Lage (18) starr ausgebildet ist.

7. Verfahren nach einem der vorhergehenden Ansprüche, **dadurch gekennzeichnet, dass** die Lage aus flexiblem Material im geöffneten Zustand der Kammer (10) dauerhaft konvex in Richtung auf den Prüfling gewölbt ist.

8. Verfahren nach einem der vorhergehenden Ansprüche, **dadurch gekennzeichnet, dass** ein Druckmessgerät (30) zur Messung des Drucks zwischen den beiden Lagen (18, 20) vorgesehen ist.

9. Verfahren nach einem der vorhergehenden Ansprüche, **dadurch gekennzeichnet, dass** die Wand (12) auf ihrer der Prüfkammervolumen (36) zugewandten Seite eine Schicht aus einem gasleitenden Material aufweist.

10. Verfahren nach einem der vorhergehenden Ansprüche, **dadurch gekennzeichnet, dass** zwischen den beiden Lagen (18, 20) gegenüber der die Prüfkammer (10) umgebenden Atmosphäre ein Überdruck im Bereich von 80 - 120 mbar herrscht.

11. Verfahren nach einem der vorhergehenden Ansprüche, **dadurch gekennzeichnet, dass** die Dichtheit der Wand (12) durch Überwachen des Drucks zwischen den Lagen (18, 20) geprüft wird.

## Claims

1. A method for a leakage test of a test piece located in a test chamber (10), wherein the test chamber is an evacuable flexible test chamber (10) for a leakage test of a test piece having a wall (12) surrounding a test chamber volume (36), wherein
at least a portion of said wall is made up of two layers (18, 20) of wall material of which at least the layer (20) facing the test chamber volume (36) is made from a flexible material,
between the two layers (18, 20) an overpressure as compared to the atmosphere surrounding the test chamber (10) is adapted to be created and
an overpressure between the layers (18, 20) is created before the chamber (10) is closed,
**characterized in that**
a check as to whether a test piece is in the test chamber (10) is performed by monitoring the pressure between the two layers (18, 20) when the test chamber (10) is being closed.

2. The method according to claim 1, **characterized in that** the flexible material is a film.

3. The method according to claim 1 or 2, **characterized in that** between the two layers (18, 20) a gas, a liquid, a foam or a gel is contained.

4. The method according to any one of claims 1 - 3, **characterized in that** the entire wall (12) of a flexible material surrounding the test chamber volume (36) is configured as one piece or made up of two partial walls (14, 16) fittingly placed on each other.

5. The method according to any one of claims 1 - 4, **characterized in that** both layers (18, 20) are made of a flexible material.

6. The method according to any one of claims 1 - 4, **characterized in that** the layer (18) facing away from the test chamber volume (36) is of rigid configuration.

7. The method according to any one of the preceding claims, **characterized in that** the layer of flexible material is permanently convexly bulged towards the test piece in the open condition of the chamber (10).

8. The method according to any one of the preceding claims, **characterized in that** a pressure measuring instrument (30) for measuring the pressure between the two layers (18, 20) is provided.

9. The method according to any one of the preceding claims, **characterized in that** the wall (12) comprises a layer of a gas-conducting material on its side facing the test chamber volume (36).

10. The method according to any one of the preceding claims, **characterized in that** between the two layers (18, 20) an overpressure in the range of 80 - 120 mbar as compared to the atmosphere surrounding the test chamber (10) prevails.

11. The method according to any one of the preceding claims, **characterized in that** tightness of the wall (12) is checked by monitoring the pressure between the layers (18, 20).

## Revendications

1. Procédé de contrôle de la présence de fuites dans un échantillon contenu dans une chambre d'essai (10), dans lequel la chambre d'essai est une chambre d'essai flexible évacuable (10) destinée à contrôler la présence de fuites dans un échantillon, dotée d'une paroi (12) entourant un volume de chambre d'essai (36), dans lequel
au moins une zone de la paroi est formée de deux couches (18,20) de matériau de paroi, dont au moins la couche (20) faisant face au volume de chambre d'essai (36) est formée d'un matériau flexible,
il est possible de créer entre les deux couches (18, 20) une surpression par rapport à l'atmosphère entourant la chambre d'essai (10), et
une surpression est établie entre les couches (18, 20) préalablement à la fermeture de la chambre (10),
**caractérisé en ce qu'**une vérification de la présence d'un échantillon dans la chambre d'essai (10) est réalisée **en ce que** la pression entre les deux couches (18, 20) est surveillée lors de la fermeture de la chambre d'essai (10).

2. Procédé selon la revendication 1, **caractérisé en ce que** le matériau flexible est un film.

3. Procédé selon la revendication 1 ou 2, **caractérisé en ce qu'**un gaz, un fluide, une mousse ou un gel est contenu entre les deux couches (18, 20).

4. Procédé selon la revendication 1-3, **caractérisé en ce que** la totalité de la paroi (12) entourant le volume de chambre d'essai (36) est formée de matériau flexible d'une seule pièce ou de deux parois partielles (14, 16) s'adaptant l'une à l'autre.

5. Procédé selon la revendication 1-4, **caractérisé en ce que** les deux couches (18, 20) sont constituées de matériau flexible.

6. Procédé selon la revendication 1-4, **caractérisé en ce que** la couche (18) opposée au volume de la chambre d'essai (36) est réalisée de manière rigide.

7. Procédé selon l'une des revendications précédentes, **caractérisé en ce que** la couche de matériau flexible est, dans l'état ouvert de la chambre (10), recourbée de manière convexe en direction de l'échantillon de manière permanente.

8. Procédé selon l'une des revendications précédentes, **caractérisé en ce qu'**un appareil de mesure de pression (30) est prévu pour mesurer la pression entre les deux couches (18, 20).

9. Procédé selon l'une des revendications précédentes, **caractérisé en ce que** la paroi (12) comporte sur sa face orientée vers le volume de chambre d'essai (36) une épaisseur de matériau poreux au gaz.

10. Procédé selon l'une des revendications précédentes, **caractérisé en ce qu'**entre les deux couches (18, 20) règne une surpression par rapport à l'atmosphère entourant la chambre d'essai (10), dans une plage de 80 - 120 mbar.

11. Procédé selon l'une des revendications précédentes, **caractérisé en ce que** l'étanchéité de la paroi (12) est contrôlée par surveillance de la pression entre les couches (18, 20).
